Europäisches Patentamt

European Patent Office

Office européen des brevets

(11) Veröffentlichungsnummer : **0 082 440
B1**

(12) **EUROPÄISCHE PATENTSCHRIFT**

(45) Veröffentlichungstag der Patentschrift :
28.11.84

(21) Anmeldenummer : **82111470.9**

(22) Anmeldetag : **10.12.82**

(51) Int. Cl.³ : **B 21 B 31/07**, **F 16 C 33/10**

(54) **Ölfilmlager.**

(30) Priorität : **19.12.81 DE 3150496**

(43) Veröffentlichungstag der Anmeldung :
**29.06.83 Patentblatt 83/26**

(45) Bekanntmachung des Hinweises auf die Patenterteilung : **28.11.84 Patentblatt 84/48**

(84) Benannte Vertragsstaaten :
**BE FR GB IT**

(56) Entgegenhaltungen :
**DE-A- 2 843 658**
**DE-C-  489 784**

(73) Patentinhaber : **MANNESMANN Aktiengesellschaft
Mannesmannufer 2
D-4000 Düsseldorf 1 (DE)**

(72) Erfinder : **Stachuletz, Manfred
Kaiserswerther Strasse 85
D-4000 Düsseldorf (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft ein Ölfilmlager für den konischen Walzenzapfen einer Walzwerkswalze, wobei auf den Walzenzapfen eine konische, mit der Walzwerkswalze rotierende Lagerbuchse aufgesetzt ist, die ihrerseits von einer in das Walzen-Einbaustück eingesetzten stationären, zylindrischen Lagerbuchse aufgenommen wird und ausgehend von dem sich zwischen der stationären und der rotierenden Lagerbuchse aufbauenden Hochdrucköfilm über radial in die rotierende Lagerbuchse eingearbeitete Zuführbohrungen eine Schmierung der Übergangszone zwischen dem konischen Walzenzapfen und der rotierenden Lagerbuchse erfolgt, indem das Öl in Schmiernuten gelangt, die sich in Achsrichtung der rotierenden Lagerbuchse erstrecken und über den Umfang verteilt angeordnet sind.

Um bei derartigen Ölfilmlagern das Abnehmen der rotierenden Buchse vom Walzenzapfen möglichst einfach und leicht zu gestalten, ist der Festsitz zwischen den aufeinander angepaßten konischen Flächen zweckmäßigerweise relativ leicht ausgeführt und daher nicht so stramm. Eine begrenzte Relativbewegung zwischen der rotierenden Lagerbuchse und dem rotierenden Walzenzapfen ist daher bei Betrieb unter Last möglich. Das hat zur Folge, daß ohne eine angemessene Schmierung zwischen den aufeinander angepaßten konischen Flächen eine von der Haftreibung zwischen dem Zapfen und der Buchse abhängige Kontaktkorrosion auftritt, die zu einem großen Reibungsverschleiß und damit zur Entstehung der sogenannten „schwarzen Flecken» führt. In schwerwiegenden Fällen werden bleibende Beschädigungen an der rotierenden Lagerbuchse und/oder am Walzenzapfen verursacht.

Zur Vermeidung dieser schädlichen Erscheinungen ist es bekannt (DE-A-2 843 658), den vorhandenen Primär-Schmiernuten noch Sekundär-Schmiernuten zuzuordnen und diese über Verbindungsnuten miteinander zu verbinden. Auf diese Weise werden mehrere voneinander getrennt über den Umfang der konischen Buchse verteilte Nutennetze gebildet, die nacheinander dann über die Zuführbohrungen unter hohem Druck stehendes Öl zugeführt erhalten, wenn sich jedes dieser Nutennetze durch die Belastungszone des Lagers dreht. Damit soll die Schmierung verbessert werden, weil dem Übergangsbereich zwischen dem Walzenzapfen und der rotierenden Lagerbuchse eines Ölfilmlagers eine größere Ölmenge zugeführt wird.

Ganz abgesehen davon, daß der fertigungstechnische Aufwand zur Herstellung der Nutennetze sehr groß ist, verbleiben trotz der ausgedehnten Verteilung von Öl über die Primär-, Sekundär- und Verbindungsnuten zu viele Teilflächen der Buchse bzw. des Walzenzapfens ohne zuverlässige Schmierung, da sich die Schmierung im wesentlichen auf die Bereiche der Nutennetze selbst begrenzt und allenfalls vagabundierende, nicht gezielt steuerbare Kriechöle die Flächen zwischen den Nutennetzen ein wenig bestreichen.

Der Erfindung liegt die Aufgabe zugrunde, die vorgenannten Nachteile zu vermeiden und die Schmiernuten in der rotierenden konischen Lagerbuchse so vorzusehen, daß durch eine umfassende Ölverteilung das Auftreten von Kontaktkorrosion zwischen dem konischen Walzenzapfen und der aufgesetzten Buchse verhindert wird.

Die Lösung dieser Aufgabe wird erfindungsgemäß dadurch erzielt, daß die Schmiernuten geneigt zu den inneren Mantellinien der rotierenden Lagerbuchse verlaufen, so daß die Schräglage der Schmiernuten eine Bestreichung der freien glatten Rotationsteilflächen der Lagerbuchse mit Öl ermöglicht, wenn die durch die Walzendrehung entstehende Zentrifugalkraft ein Austreten von Kriechölen aus den Schmiernuten hervorruft. Hierbei wird von der Erkenntnis ausgegangen, daß wegen der Walzendrehung Öl aus den Schmiernuten austritt und zwar erfolgt dieses bedingt durch die Fliehkraft in Richtung der Mantellinien der Buchse bzw. des Lagers. Die Umsetzung dieser Erkenntnis bedeutet, daß bei ausreichender Schräglage der Schmiernuten die in Richtung der Mantellinie austretenden Kriechöle in die an sich von Schmiernuten freien, glatten Rotationsteilflächen gelangen und somit für eine Schmierung auch dieser Bereiche sorgen. Zweckmäßig sind insgesamt zwölf Schmiernuten auf den Umfang verteilt in die Buchse eingearbeitet, und bei dieser Anzahl weist eine jede Schmiernut gegenüber der ihr zugeordneten Mantellinie der Buchse eine Schräglage von 18° auf. Wird dieser Winkel bei gleicher Schmiernuten-Anzahl noch größer gewählt, kommt es sogar zu einem teilweisen Überlappen der Kriechölströme.

Eine Ausgestaltung der Erfindung sieht vor, daß die Lagerbuchse zweite Schmiernuten aufweist, die in entgegengesetzter Richtung in gleicher Schräglage verlaufen wir die ersten Schmiernuten, wobei die zweiten Schmiernuten die ersten Schmiernuten kreuzen. Hiermit ist berücksichtigt, daß eine Buchse entweder rechts- oder linksdrehenden Bewegungen durch den Walzenzapfen ausgesetzt sein kann, je nachdem ob es sich um die Unter- oder Oberwalze handelt. Die sich kreuzenden Schmiernuten sollen bei jeder Drehrichtung den möglicherweise auftretenden Axialbewegungen entgegenwirken und ein etwaiges Herausdrehen des nicht so festen Preßsitzes zwischen Zapfen und Buchse unterdrücken.

Nach einem weiteren Vorschlag der Erfindung sind die radialen Zuführungsbohrungen im dicken Teil der konischen Lagerbuchse eingearbeitet. Damit ist erreicht, daß in der Schmiernuten-Anordnung nicht noch zusätzliche Drosselnuten vorhanden sein müssen, die ein Abfließen des zugeführten Öls durch die ansonsten im dünneren Teil der Buchse noch vorhandenen Bohrungen verhindert.

Der Erfindungsgegenstand wird anhand der in der Zeichnung dargestellten Ausführungsbeispiele näher erläutert. Es zeigen

Figur 1 die teilweise im Querschnitt wiedergegebene Ansicht des Walzenzapfenendes einer Walzwerkswalze mit der Lagerung des konischen Zapfenteils in der rotierenden bzw. der stationären Buchse eines nicht weiter abgebildeten Ölfilmlagers,

Figur 2 eine Ansicht der konischen Zapfenbuchse gemäß der Erfindung in Achsrichtung,

Figur 3 einen Schnitt entlang der Linie I-I nach Fig. 2,

Figur 4 die Ansicht einer konischen Zapfenbuchse mit erfindungsgemäß gekreuzten Schmiernuten in Achsrichtung und

Figur 5 einen Schnitt entlang der Linie II-II nach Fig. 4.

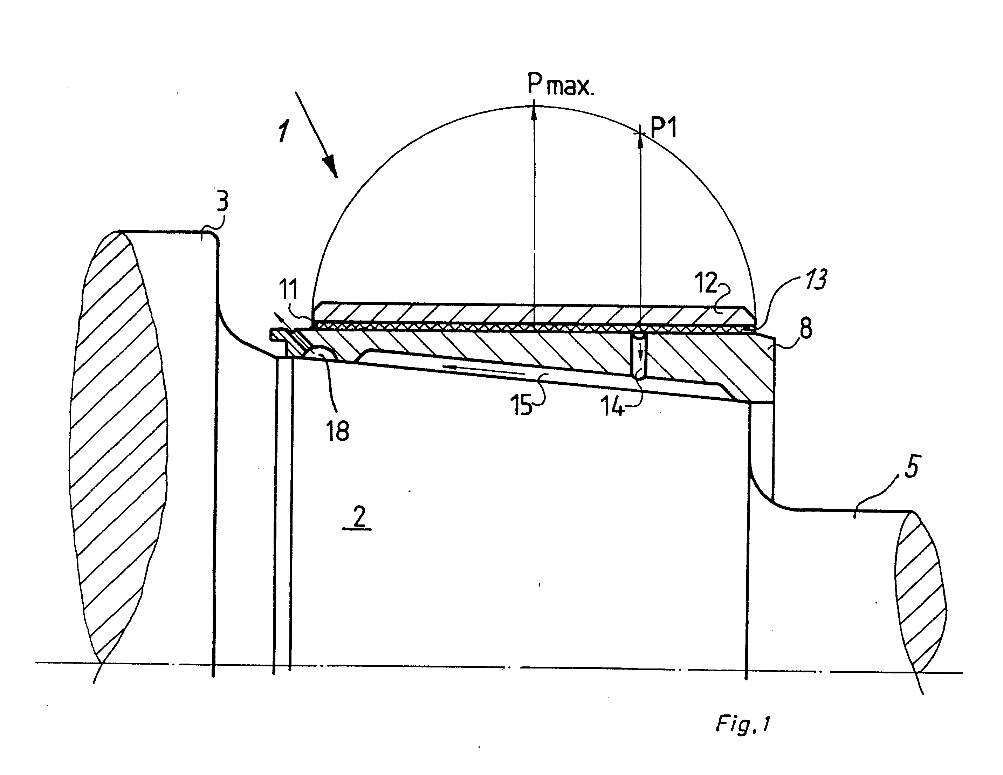

Das in Fig. 1 abgebildete Walzenzapfenende 1 einer Walzwerkswalze hat einen konischen Walzenzapfenabschnitt 2, der sich vom Walzenkörper 3 aus bis zu einem Abschnitt 5 kleineren Durchmessers erstreckt. Zum nicht näher gezeichneten Ölfilmlager bekannter Bauart gehört eine konische Lagerbuchse 8, welche auf den konischen Abschnitt 2 des Walzenzapfenendes 1 aufgesetzt und mittels nicht dargestellter Keilbefestigung gehalten ist. Es versteht sich, daß über diese Maßnahme hinaus noch andere Haltemittel des Ölfilmlagers für einen Sitz der Lagerbuchse 8 sorgen. Die zylindrische Umfangsfläche 11 der mit dem Walzenzapfen rotierenden Buchse 8 ist in eine stationär im Walzeneinbaustück angeordnete Lagerbuchse 12 eingesetzt und kann sich in der stationären Lagerbuchse drehen.

Während des Betriebes wird ständig Öl zwischen die stationäre Lagerbuchse 12 und die rotierende Lagerbuchse 8 zugeführt, so daß in der Belastungs- oder Lastaufnahmezone des Ölfilmlagers auf hydrodynamische Weise ein Hochdrucköfilm 13 entsteht. Da der Preßsitz zwischen dem konischen Zapfen 2 und der rotierenden Buchse 8 relativ leicht ist, kommt es (wenn das Walzgerüst unter Last arbeitet) zu geringen Relativbewegungen zwischen diesen Teilen. Daraus ergibt sich die Forderung, auch die Übergangszone zwischen dem konischen Walzenzapfen und der rotierenden Buchse zu schmieren und dadurch etwaigen Verschleiß auszuschalten. Es wird daher von dem in der Belastungszone unter hohem Druck stehenden Öl eine Teilmenge über umfangsverteilte Zuführbohrungen 14, welche in Radialrichtung in die rotierende Buchse 8 eingearbeitet sind, in eine Reihe von Schmiernuten 15 geleitet.

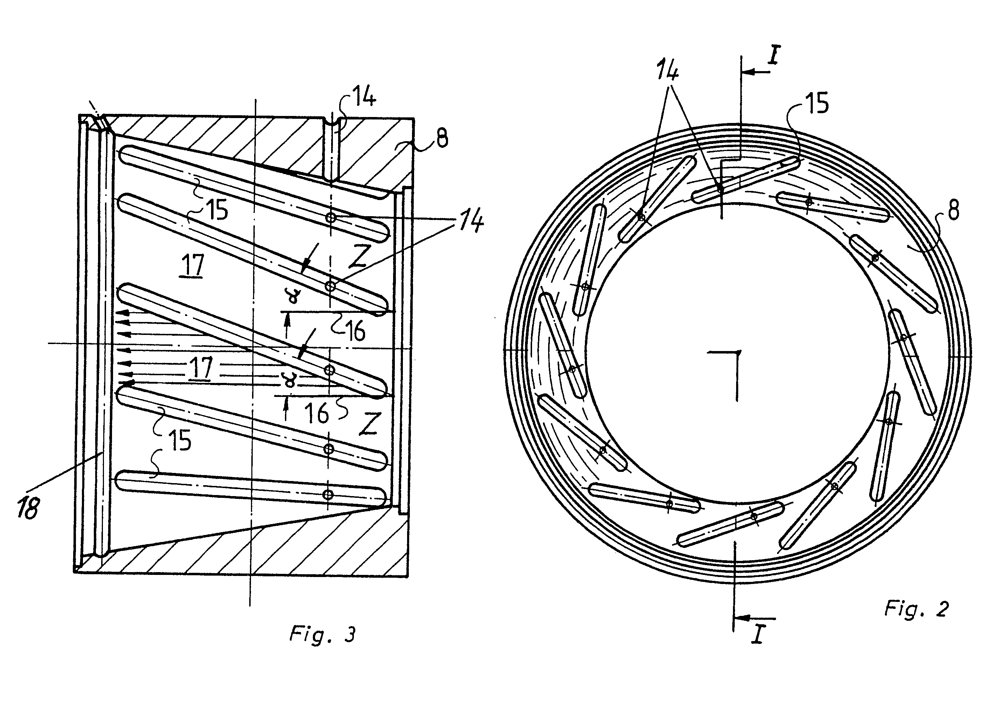

Die Schmiernuten 15 befinden sich in der konischen Innenfläche der rotierenden Buchse 8 und sind so darin eingearbeitet, daß sie unter einem bestimmten Winkel α geneigt zu den inneren Mantellinien 16 der Buchse verlaufen (Fig. 3). Mit zunehmender Walzendrehung verstärkt sich die Fliehkraft und bewirkt ein Entweichen von Kriechöl aus den Schmiernuten 15, wobei die Fliehkraft in Richtung der Mantellinien wirkt, so daß sich auch das Öl in dieser Richtung verteilt und (wie in Fig. 3 mit Pfeilen dargestellt) auch die ansonsten freien Rotationsteilflächen 17 der Buchse 8 mit Öl benetzt. Am Ende des konischen Walzenzapfenabschnittes 2 zum Walzenkörper 3 hin wird das Öl in einer Nut 18 gesammelt und wieder dem Schmierkreislauf zugeführt. In die in Fig. 3 bzw. Fig. 5 mit Z bezeichneten Teilflächen der Buchse 8 gelangt das durch die Fliehkraft austretende Öl nicht hin, was aber nicht nachteilig ist, da hier gemäß Druckkurve nach Fig. 1 nur relativ geringe Drücke vorhanden sind. Die sehr schädlichen « schwarzen Flecken » treten in der Praxis auch nur im Bereich der höchsten Belastung P max. etwa in der Mitte des Lagers auf. Andererseits können die Zuführbohrungen 14 auch nicht beliebig nach außen gelegt werden, denn der an der Radialebene der Bohrungen 14 vorhandene Druck P 1 muß ausreichend hoch sein, um das Öl in die Schmiernuten 15, 19 zwischen Zapfen 2 und Buchse 8 gelangen zu lassen.

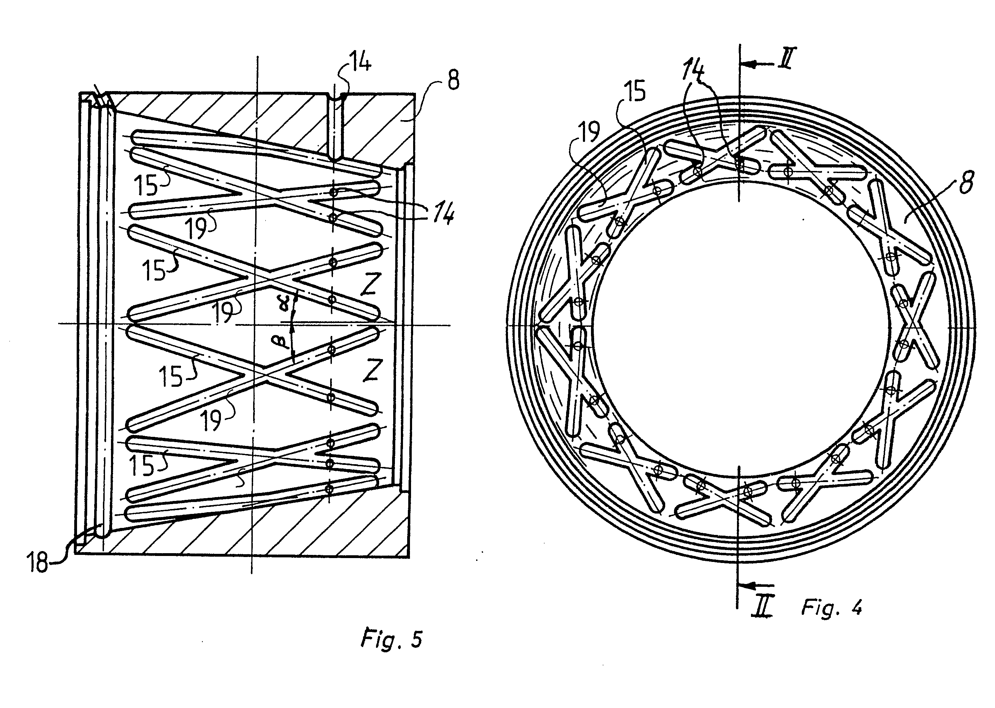

Bei dem Ausführungsbeispiel nach den Fig. 4 und 5 sind zu den ersten Schmiernuten 15 noch zweite Schmiernuten 19 in die konische Fläche der rotierenden Buchse 8 eingearbeitet, wobei diese Schmiernuten 19 ebenfalls schrägliegend verlaufen, allerdings in entgegengesetzter Richtung zu den Schmiernuten 15. Der dabei zur Mantellinie 16 eingehaltene Winkel β entspricht absolut dem Winkel α der ersten Schmiernuten, so daß sich die Nuten 15, 19 in der Konusfläche der Buchse 8 kreuzen.

## Ansprüche

1. Ölfilmlager für den konischen Walzenzapfen (2) seiner Walzwerkswalze (3), wobei auf den Walzenzapfen eine konische, mit der Walzwerkswalze rotierende Lagerbuchse (8) aufgesetzt ist, die ihrerseits von einer in das Walzen-Einbaustück eingesetzten stationären, zylindrischen Lagerbuchse (12) aufgenommen wird und ausgehend von dem sich zwischen der stationären (12) und der rotierenden Lagerbuchse (8) aufbauenden Hochdrucköfilm (13) über radial in die rotierende Lagerbuchse (8) eingearbeitete Zuführbohrungen (14) eine Schmierung der Übergangszone zwischen dem konischen Walzenzapfen und der rotierenden Lagerbuchse (8) erfolgt, indem das Öl in Schmiernuten gelangt, die sich in Achsrichtung der rotierenden Lagerbuchse (8) erstrecken und über dem Umfang verteilt angeordnet sind, dadurch gekennzeichnet, daß die Schmiernuten 15 geneigt zu den inneren Mantellinien (16) der rotierenden Lagerbuchse (8) verlaufen, so daß die Schräglage der Schmiernuten (15) eine Bestreichung der freien, glatten Rotationsteilflächen (17) der Lagerbuchse (8) mit Öl ermöglicht, wenn die durch die Walzendrehung entstehende Zentrifugalkraft ein Austreten von Kriechölen aus den Schmiernuten (15) hervorruft.

2. Ölfilmlager nach Anspruch 1, dadurch gekennzeichnet, daß die Lagerbuchse (8) zweite Schmiernuten (19) aufweist, die in entgegengesetzter Richtung in gleicher Schräglage verlaufen wie die ersten Schmiernuten (15), wobei die zweiten Schmiernuten (19) die ersten Schmiernuten (15) kreuzen (Fig. 5).

3. Ölfilmlager nach den Ansprüchen 1 oder 2, dadurch gekennzeichnet, daß die radialen Zuführbohrungen (14) im dickeren Teil der konischen Lagerbuchse (8) eingearbeitet sind.

## Claims

1. An oil-film bearing for the tapered roll neck (2) of a rolling mill roll (3) with the roll neck carrying a conical bearing shell (8) that rotates with the rolling mill axis and that, in turn, is received in a stationary, cylindrical bearing shell (12), inserted in the roll chock assembly, from which originates the lubrication of the transition zone between the tapered roll neck and the rotating bearing shell (8) in the form of a highpressure oil film (13) building up between the stationary bearing shell (12) and the rotating bearing shell (8) using feed bores (14) machined radially into the rotating bearing shell (14) with the oil running in lubricating grooves that extend in axial direction of the rotating bearing shell (8) and which are distributed over the circumference, characterised by the lubricating grooves (15) being inclined relative to the inner shell lines (16) of the rotating bearing shell (8) so that the inclination of the lubricating grooves (15) will render possible oil to spread on the vacant and smooth rotation part-areas (17) of the bearing shell (8) when the centrifugal force from roll rotation causes creeping oil to emerge from the lubricating grooves (15).

2. An oil-film bearing according to claim 1, characterised by the bearing shell (8) having second lubricating grooves (19) that extend in opposite direction, equally inclined as the first lubricating grooves (15) with the second lubricating grooves (19) crossing the first lubricating grooves (15) (Fig. 5).

3. An oil-film bearing according to claims 1 or 2, characterised by the radial feed bores (14) being machined into the thicker portion of the tapered bearing shell (8).

## Revendications

1. Palier à film d'huile pour le tourillon de cylindre (2) d'un cylindre de laminoir (3), le tourillon de palier étant surmonté d'un coussinet de palier conique (8) tournant avec le cylindre de laminoir, ce coussinet de palier étant de son côté repris par un coussinet de palier cylindrique stationnaire (12) incorporé dans l'empoise de cylindre et partant du film d'huile haute pression (13) qui s'établit entre le coussinet de palier stationnaire (12) et le coussinet de palier rotatif (8), il résulte, par l'intermédiaire d'alésages d'alimentation (14) usinés dans le coussinet de palier rotatif (8), une lubrification de la zone de transition entre le tourillon de palier conique et le tourillon de palier rotatif (8), l'huile parvenant dans les rainures de lubrification pratiquées dans le sens de l'axe du coussinet de palier rotatif (8) et réparties sur le pourtour, caractérisé en ce que les rainures de lubrification (15) sont disposées de façon inclinée par rapport aux génératrices intérieures (16) de l'enveloppe du coussinet de palier rotatif (8), de sorte que la position inclinée des rainures de lubrification (15) permette un enduit d'huile des surfaces primitives de référence (17) lisses libres du coussinet de palier (8) si la force centrifuge due à la rotation du cylindre occasionne des fuites d'huile aux rainures de lubrification (15).

2. Palier à film d'huile suivant la revendication 1, caractérisé en ce que le coussinet de palier (8) présente des deuxièmes rainures de lubrification (19) disposées en sens opposé dans la même position inclinée que les premières rainures de lubrification (15), les deuxièmes rainures de lubrification (19) croisant les premières rainures de lubrification (15).

3. Palier à film d'huile suivant les revendications 1 ou 2 caractérisé en ce que les alésages d'alimentation radiaux (14) sont usinés dans la partie plus épaisse du coussinet de palier conique (8).

Fig.1

Fig. 2

Fig. 3

2

Fig. 5

Fig. 4

0 082 440